# EUROPÄISCHE PATENTSCHRIFT

(11) **EP 3 823 495 B1**
(45) Veröffentlichungstag und Bekanntmachung des Hinweises auf die Patenterteilung: **18.01.2023**
(21) Anmeldenummer: 19730766.3
(22) Anmeldetag: 13.06.2019
(51) Int. Cl.: A47B 21/02, A47B 9/00

(54) **ARBEITSZELLE**
WORK CELL
CELLULE DE TRAVAIL

(30) Priorität: 19.06.2018 DE 102018114659
(43) Veröffentlichungstag der Anmeldung: 26.05.2021
(73) Patentinhaber: YAASA GmbH, 8530 Deutschlandsberg (AT)
(72) Erfinder: KOCH, Walter, 8541 Schwanberg (AT)
(74) Vertreter: Epping - Hermann - Fischer
(86) Internationale Anmeldenummer: PCT/EP2019/065567
(87) Internationale Veröffentlichungsnummer: WO 2019/243166

(56) Entgegenhaltungen:
- WO-A1-90/13240
- DE-U1- 20 317 193
- US-A- 5 630 566
- US-B1- 7 152 358

## Beschreibung

Die vorliegende Offenbarung betrifft eine Arbeitszelle, insbesondere als Büroarbeitsplatzsystem.

In Büros oder ähnlichen Arbeitsumgebungen ist es mittlerweile üblich, Arbeitsplätze in Form von Schreibtischen höhenverstellbar auszuführen, sodass die Benutzer der Arbeitsplätze eine Höhe der Arbeitsfläche an ihre Bedürfnisse anpassen können. Neben einer ergonomischen Einstellung für die richtige Höhe bei einem Arbeiten im Sitzen ermöglicht die Höhenverstellung auch ein Arbeiten im Stehen.

Allerdings benötigen solche herkömmlichen Arbeitsplätze unabhängig von der Nutzungsart immer eine große Nutzfläche innerhalb einer Bürolandschaft. Zudem sind solche herkömmlichen Arbeitsplätze lediglich für einen einzigen Benutzer ausgelegt und eingerichtet, sodass eine flexible Kollaboration mit anderen Mitarbeitern nicht oder nur mit starken Einschränkungen möglich ist.

Die DE 203 17 193 U1 zeigt eine fahrbare Computer- und Lesestation mit einem arretierbaren Basiswagen, der mit einem höhenverstellbaren und de- und remontierbaren Standrohr versehen ist, wobei am oberen Ende des Standrohres ein radial abstehender Schwenkarm höhenverstellbar und in der jeweiligen Dreh- und Höhenposition arretierbar gelagert ist, und wobei am freien Ende des Schwenkarms eine Dockingstationsplatte in ihrer Neigung und in ihrem radialen Abstand zum Standrohr einstellbar gelagert und mit einstellbaren Feststellmechanismen versehen ist.

Die US 7,152,358 B1 zeigt eine verstellbare tragbare Schießbank bestehend aus einem längenverstellbaren Längsträger mit vorderen und hinteren Stützen, einer hinteren Sitzfläche, einer vorderen Drehachsenhalterung, an der drehbar und verstellbar radial verlaufende Stützen angebracht sind, die eine Ellbogenablage und eine Mündungsablage tragen.

Die WO 90/013240 A1 zeigt ein Tragsystem, insbesondere für Büros und Heimarbeitstätten, das Arbeits- und Abstellflächen aufweist, welche leicht, insbesondere in der Höhe, verstellt werden können. Das System lässt sich durch zeitlich programmierte Höhenverstellung zur Prophylaxe und Therapie von Haltungsschäden verwenden.

Eine zu lösende Aufgabe besteht darin, ein verbessertes Arbeitsplatzkonzept anzugeben, welches weniger Nutzfläche benötigt und sich durch Flexibilität auszeichnet.

Diese Aufgabe wird gelöst mit dem Gegenstand des unabhängigen Anspruchs. Weiterbildungen und Ausgestaltungsformen sind in den abhängigen Ansprüchen gekennzeichnet.

Das verbesserte Arbeitsplatzkonzept basiert auf der Idee, eine Arbeitszelle nach einem Baumprinzip mit einem Stamm aufzubauen, der höhenverstellbar, insbesondere elektrisch höhenverstellbar ausgeführt ist. An den Stamm werden unterschiedliche Arbeitseinheiten angeschlossen, im Prinzip wie Äste und Blätter. Die Arbeitseinheiten sind zumindest teilweise über drehbare Gelenke an dem Stamm befestigt und können verriegelt beziehungsweise verrastet werden, wenn dies für die Funktion der Arbeitseinheit vorteilhaft ist. Die Arbeitseinheiten sind beispielsweise durch Arbeitsflächen wie bei einem Tisch, durch Ablagen, Halterungen für einen Monitor oder berührungsempfindlichen Bildschirm oder ähnliches gebildet. Die verschiedenen Arbeitseinheiten sind beispielsweise über Trägerstrukturen gelagert. Der Stamm, beispielsweise in Form einer Säule, insbesondere teleskopischen Säule, ist vorteilhaft auf einer Fußkonstruktion mit mindestens drei Auflageflächen, insbesondere für einen Bodenkontakt, gelagert.

In einer Ausgestaltungsform des verbesserten Arbeitsplatzkonzepts weist eine Arbeitszelle beispielsweise eine Fußkonstruktion mit drei Auflageflächen, insbesondere für einen Bodenkontakt, sowie eine Säule mit unteren Teil, das mit der Fußkonstruktion verbunden ist, und mit einem oberen Teil auf, das bezüglich dem unteren Teil höhenverstellbar, insbesondere elektromechanisch höhenverstellbar ist. Eine erste Trägerstruktur ist über ein erstes Gelenkelement mechanisch mit dem oberen Teil der Säule verbunden, wobei das erste Gelenkelement eine axiale Drehung der ersten Trägerstruktur um die Säule ermöglicht. In ähnlicher Weise ist wenigstens eine zweite Trägerstruktur über ein zweites Gelenkelement mechanisch mit dem oberen Teil der Säule verbunden, wobei das zweite Gelenkelement eine axiale Drehung der zweiten Trägerstruktur ermöglicht. Wenigstens ein Gelenkelement aus dem ersten und zweiten Gelenkelement weist einen Verrastungsmechanismus auf, der eingerichtet ist, eine Bewegung des Gelenkelements bezüglich der Säule in einem Normalzustand zu blockieren und bei einem von einem Benutzer der Arbeitszelle initiierten Verstellvorgang die Bewegung des Gelenkelements freizugeben.

Erfindungsgemäß weist der Verrastungsmechanismus wenigstens ein elektromechanisches Element auf, welches die Blockierung und die Freigabe der Bewegung des Gelenkelements bewirkt.

Beispielsweise können an den Trägerstrukturen verschiedene Arbeitseinheiten angebracht werden, wobei deren Auswahl grundsätzlich flexibel ist und an den individuellen Bedarf des Benutzers anpassbar ist. Dies gilt insbesondere auch bei sich einstellenden Änderungen im Arbeitsverhalten des Benutzers, bei dem einzelne Arbeitseinheiten durch andere Arbeitseinheiten ausgetauscht werden können. Beispielsweise ist jedoch vorstellbar, dass an der ersten Trägerstruktur eine Platte, insbesondere eine Tischplatte, befestigt ist und/oder an der zweiten Trägerstruktur eine Halterung für einen Bildschirm befestigt ist.

Eine solche Arbeitszelle greift die Bedürfnisse nach Privatsphäre in Großraumbüros sowie Ergonomie und dynamische Interaktion in konzentrierter Arbeit von Einzelpersonen, aber auch Besprechungen in Kleinstgruppen auf. Bei fortschreitender Digitalisierung im Büro, welche eine sukzessive Reduzierung der Verwendung von Papier bei gleichzeitig wachsenden bürosensitiven Bildschirmdiagonalen mit sich bringt, bietet eine Arbeitszelle gemäß dem verbesserten Arbeitsplatzkonzept eine Erhöhung der Freiheitsgrade in Bezug auf die mögliche Anpassung an moderne Arbeitssituationen. Diese sind unter anderem fokussierte Einzelarbeit im Sitzen und Stehen mit Eingaben etwa durch Maus und Tastatur, oder Bedienung durch Berührung der Bildschirmoberfläche mittels Fingereingabe, aber auch Besprechungen in Kleingruppen, in denen der Bildschirm als interaktives Medium genutzt wird und die Tischplatte in den Hintergrund gerückt beziehungsweise rotiert werden kann.

Die Ausprägung mit einer einzigen Säule erhöht die Flexibilität der Arbeitszelle im Vergleich zu herkömmlichen Tischsystemen, bei denen mehrere Säulen oder ganze Rahmenkonstruktionen verwendet werden müssen.

Der einfache Aufbau mit nur einer Säule ermöglicht auch eine leichtere Relozierbarkeit der Arbeitszelle zwischen verschiedenen Arbeitspositionen. Dies kann beispielsweise auch dadurch unterstützt werden, dass in der Fußkonstruktion, insbesondere in oder an den Auflageflächen, Rollen vorgesehen sind, mit denen die Arbeitszelle verschoben werden kann.

Die Höhenverstellung der Säule ermöglicht nicht nur die Anpassung der Höhe zur Verwendung des Arbeitsplatzes, wahlweise als Steh- oder Sitzarbeitsplatz, sondern auch um Größenunterschiede verschiedener Benutzer auszugleichen.

In einer weiteren Ausbaustufe kann die Arbeitszelle mit durch elektromechanischen Antrieben versehenen Rädern oder Rollen ausgestattet werden, um die Flexibilität der örtlichen Aufstellung zu automatisieren oder den Benutzer zumindest bei der Verstellung zu unterstützen.

Der Verrastungsmechanismus der Gelenkelemente kann in einem, in beiden oder falls weitere Trägerstrukturen über Gelenkelemente an der Säule befestigt sind, auch in den weiteren Gelenkelementen eingeschlossen sein. Der Verrastungsmechanismus bewirkt jeweils, dass eine Einstellung des jeweiligen Gelenkelements unverändert bleibt, außer eine Verstellung ist vom Benutzer beabsichtigt und/oder freigegeben. Der Verrastungsmechanismus bewirkt insbesondere, dass bei einer an der zugeordneten Trägerstruktur befestigten Arbeitseinheit, also etwa eine Platte oder eine Bildschirmhalterung, eine stabile, insbesondere winkelstabile Position eingehalten wird. Für manche Arbeitssituationen beziehungsweise Arbeitseinheiten kann es allerdings auch sinnvoll sein, den Verrastungsmechanismus im Gelenkelement wegzulassen oder zumindest zu deaktivieren, um etwa die jeweilige Arbeitseinheit leichter verstellen zu können.

Beispielsweise erfolgt die Blockierung der Bewegung des Gelenkelements im Verrastungsmechanismus automatisch und/oder selbsthemmend.

Beispielsweise weist der Verrastungsmechanismus zusätzlich wenigstens ein Federelement auf, welches die Blockierung der Bewegung des Gelenkelements bewirkt, diese Wirkung kann direkt oder indirekt entstehen, indem etwa das Federelement auf ein weiteres mechanisches Element wirkt, welches die Bewegung beziehungsweise Drehung hemmt und/oder blockiert.

Grundsätzlich kann die Blockierung der Bewegung beispielsweise durch eine Erhöhung der Reibung zwischen den sich bewegenden Komponenten, durch das Einrasten einer Verzahnung oder eines Stifts oder eines Splints, erfolgen.

Unabhängig von dem Vorhandensein eines Verrastungsmechanismus sind in verschiedenen Ausführungsformen das erste und/oder das zweite oder gegebenenfalls weitere Gelenkelemente für eine elektromechanische Drehung beziehungsweise Bewegung eingerichtet. Eine Verstellung kann beispielsweise über einen Elektromotor direkt oder indirekt erfolgen. Durch die oben beschriebenen Möglichkeiten und Ausprägungen des Gelenkelements beziehungsweise des Verrastungsmechanismus lassen sich somit Arbeitseinheiten an den Trägerstrukturen in verschiedenen Ausprägungen ausbilden.

In einer Ausgestaltung erfolgt beispielsweise eine manuelle mechanische Verstellung durch Krafteinwirkung des Benutzers sowie einen Haltemechanismus in Form des Verrastungsmechanismus, etwa durch Federwirkung.

In einer anderen Ausgestaltung erfolgt beispielsweise eine manuelle mechanische Verstellung durch Krafteinwirkung des Benutzers mit einem Haltemechanismus beziehungsweise Verrastungsmechanismus durch Verrastung oder Bremswirkung einer elektromechanischen Einrichtung in den Gelenkelementen der Konstruktion.

In einer weiteren Ausgestaltung erfolgt eine Verstellung mittels eines elektromechanischen Antriebs im komplett automatischen oder benutzerassistierten Betrieb, wobei eine Verrastung und/oder Bremswirkung durch Mechanismen im Gelenkelement selbst erfolgen.

Für einen solchen benutzerassistierten Betrieb weist die Arbeitszelle jeweilige Sensoren auf, die einen vom Benutzer initiierten Verstellvorgang detektieren. Beispielsweise sind hierzu Tastsensoren vorgesehen, über die der Benutzer eine Bewegung in einer bestimmten Richtung signalisieren kann. Alternativ können im Gelenkelement und/oder in der zugeordneten Trägerstruktur Sensoren, insbesondere Bewegungssensoren, vorgesehen sein, die eine mechanisch begonnene Bewegung beziehungsweise einen Verstellvorgang des Benutzers detektieren und abhängig davon die Verstellung und/oder Verrastung kontrollieren und regeln. Die Bewegungssensoren sind beispielsweise als Neigungssensoren und/oder Beschleunigungssensoren bzw. Gyrosensor ausgebildet.

Die verwendeten Sensoren können auch optische Sensoren umfassen, etwa bildgebende Sensoren wie 2D- oder 3D-Kamerasensoren. Durch solche Sensoren können beispielsweise Bewegungen oder Gesten eines Benutzers detektiert und ausgewertet werden, um Verstellvorgänge zu initiieren oder zu unterstützen.

In den bisherigen beschriebenen Ausführungsformen ermöglichen die Gelenkelemente lediglich eine Drehung der Trägerstrukturen um die Achse der Säule. Für verschiedene Arbeitssituationen kann es jedoch sinnvoll sein, weitere Verstellparameter oder Freiheitsgrade für die Verstellung zu ermöglichen.

In verschiedenen weitergebildeten Ausgestaltungsformen der Arbeitszelle ermöglichen das erste und/oder das zweite Gelenkelement eine axiale Drehung der ersten und zweiten Trägerstruktur um wenigstens eine weitere Achse, die in einem Winkel, insbesondere einem rechten Winkel, zur Säule verläuft. Damit kann die an der jeweils zugeordneten Trägerstruktur befestigte Arbeitseinheit zusätzlich verstellt werden.

In solchen Ausgestaltungsformen ist der jeweilige Verrastungsmechanismus eingerichtet, eine Bewegung des Gelenkelements bezüglich der weiteren Achse in einem Normalzustand zu blockieren und bei einem von einem Benutzer der Arbeitszelle initiierten Verstellvorgang die Bewegung des Gelenkelements bezüglich der weiteren Achse freizugeben.

Die Bewegung um mehrere Achsen kann in einem einzigen Gelenk des Gelenkelements realisiert sein, aber auch durch mehrere Gelenke, die in dem Gelenkelement enthalten beziehungsweise zusammengefasst sind. Gelenkelemente, die weitere Freiheitsgrade zulassen, können ebenfalls eingesetzt werden.

In verschiedenen Ausgestaltungsformen der Arbeitszelle weisen das erste und/oder das zweite Gelenkelement ein Stabilisierungselement auf, welches eingerichtet ist, eine räumliche Lage der zugeordneten Trägerstruktur bezüglich Bewegungen, Neigungen oder Schwingungen der Säule und/oder der zugeordneten Trägerstruktur auszugleichen. Solche Bewegungen, Neigungen oder Schwingungen der Säule und/oder der zugeordneten Trägerstruktur können auch resultieren aus Bewegungen, Neigungen oder Schwingungen der anderen Komponenten, die an der Säule befestigt sind, etwa des Fußteils. Allgemein lassen sich somit jegliche Bewegungen, Neigungen oder Schwingungen im System der Arbeitszelle ausgleichen.

Das Stabilisierungselement ist beispielsweise elektromechanisch ausgeführt und enthält sowohl entsprechende Sensorik, um Bewegungen, Neigungen und/oder Schwingungen der Säule und/oder der zugeordneten Trägerstruktur festzustellen, als auch Motorik, um diese auszugleichen. Die Sensoren können dabei im Gelenkelement beziehungsweise im Stabilisierungselement enthalten sein, aber auch extern, beispielsweise an der Trägerstruktur befestigt sein. Somit können die zugeordnete Trägerstruktur und/oder daran befestigte Arbeitseinheiten für den Benutzer in einer stabilen Lage gehalten werden.

In verschiedenen Ausgestaltungsformen weist wenigstens eine der Trägerstrukturen ein jeweiliges weiteres Gelenkelement auf, welches beabstandet zur Säule angeordnet ist. Dadurch sind die Verstellmöglichkeiten der jeweiligen Trägerstruktur weiter erhöht. Beispielsweise lassen sich mit einem weiteren Gelenkelement, dessen Rotationsachse parallel zur Säule verläuft, Abstände zwischen der Arbeitseinheit, die an der Trägerstruktur befestigt ist, und der Säule variieren. Falls das jeweilige Gelenkelement an der Säule zusätzlich zur Drehung um die Säule weitere Bewegungsrichtungen ermöglicht, kann das weitere Gelenkelement beispielsweise für eine parallele Bewegung dazu eingerichtet sein, um etwa Neigungen auszugleichen und sozusagen eine Parallelität zum Boden beziehungsweise der Auflage der Arbeitszelle herzustellen beziehungsweise zu erhalten.

Beispielsweise weist das weitere Gelenkelement einen weiteren Verrastungsmechanismus auf, der eingerichtet ist, eine Bewegung des weiteren Gelenkelements in dem Normalzustand zu blockieren und bei einem von dem Benutzer initiierten Verstellvorgang die Bewegung des weiteren Gelenkelements freizugeben. Der Verrastungsmechanismus kann dabei in Analogie zu den zuvor beschriebenen Verrastungsmechanismen ausgeführt sein.

Das obere Teil kann in verschiedenen Ausgestaltungen im Wesentlichen einstückig ausgeführt sein. In alternativen Ausgestaltungen weist das obere Teil ein erstes Stück und wenigstens ein zweites Stück auf, das mit dem ersten Stück mechanisch gekoppelt ist. Das erste Stück bildet dabei mit dem unteren Teil eine Anordnung zur Höhenverstellung. An dem zweiten Stück sind das erste und zweite Gelenkelement befestigt. Die vorzugsweise teleskopische Anordnung zur Höhenverstellung ermöglicht dabei, dass das obere Teil bezüglich dem unteren Teil höhenverstellbar ist.

Diese Implementierung ermöglicht beispielsweise, dass das erste Stück und das untere Teil als Komponenten der Anordnung zur Höhenverstellung bezüglich ihrer Größe direkt aufeinander abgestimmt sein können. Zusätzlich spielt es auch keine Rolle, ob die obere oder die untere Komponente der Anordnung zur Höhenverstellung einen größeren Umfang aufweist bzw. die andere Komponente umfasst. Somit sind beide Varianten, größerer Umfang unten oder größerer Umfang oben, möglich.

In verschiedenen Ausgestaltungen umfasst die Arbeitszelle ferner ein Lampenelement, das an dem oberen Teil der Säule befestigt ist, insbesondere beweglich befestigt ist. Beispielsweise ist das Lampenelement an einem freien Ende des oberen Teils befestigt, insbesondere in axialer Richtung der Säule. Alternativ ist das Lampenelement wie die Trägerstrukturen über ein entsprechendes Gelenkelement an dem oberen Teil befestigt. Das Lampenelement kann in den verschiedenen Varianten gelenkig an der Säule befestigt sein, um eine individuelle Einstellung des Lampenelements beziehungsweise der darin enthaltenen Beleuchtung zu ermöglichen.

In verschiedenen Ausgestaltungen umfasst die Arbeitszelle ferner ein Sichtschutzelement, welches an der Säule befestigt ist. Die Befestigung erfolgt beispielsweise drehbar, insbesondere über ein zusätzliches Gelenkelement. Das Sichtschutzelement ist beispielsweise faltbar und/oder mit zueinander verschiebbaren Abschnitten, beispielsweise fächerartig, ausgeführt, um das Maß der Abdeckung an die jeweilige Arbeitssituation anpassen zu können. Vorzugsweise ist das Sichtschutzelement gewölbt ausgeführt, sodass insbesondere ein Sichtschutz rund um die Achse herum ermöglicht wird. Das Sichtschutzelement kann auch zusätzlich als akustischer Schutz genutzt werden, wodurch ein ungestörteres Arbeiten in der Arbeitszelle möglich ist. Beispielsweise umfasst das Sichtschutzelement eine Konstruktion zum Abschirmen, die aus einer Kombination aus Kunststoff oder Metall und einem textilen Stoff gebildet ist.

In verschiedenen Ausgestaltungen umfasst die Arbeitszelle ferner eine Steuerung. Die Steuerung ist beispielsweise eingerichtet, eine Bewegung wenigstens eines der Gelenkelemente in Antwort auf die Betätigung von Sensoren durch den Benutzer anzusteuern. Alternativ oder zusätzlich ist die Steuerung eingerichtet, einer vom Benutzer initiierten Bewegung eines der Gelenkelemente und/oder einer der Trägerstrukturen auf Basis von wenigstens einem Signal eines Bewegungssensors der Arbeitszelle zu folgen. Ein solcher Bewegungssensor ist beispielsweise als Neigungssensor und/oder Beschleunigungssensor bzw. Gyrosensor ausgebildet. Ferner alternativ oder zusätzlich kann die Steuerung eingerichtet sein, gespeicherte Konfigurationen wenigstens eines der Gelenkelemente und/oder wenigstens eines der Trägerstrukturen in Antwort auf eine Auswahl durch den Benutzer einzustellen.

Weitere Möglichkeiten für den Einsatz der Steuerung sind damit nicht ausgeschlossen. Insbesondere können über die Steuerung auch die Höhenverstellung der Säule, wenn ein elektromechanischer Antrieb vorgesehen ist, und/oder die Ansteuerung von weiteren an die Arbeitszelle angeschlossenen Komponenten, wie zum Beispiel das Lampenelement, erfolgen. Zu diesem Zweck können auch einfache Tastsensoren vorgesehen werden, die von der Steuerung ausgewertet werden. Höhenverstellung und/oder die Ansteuerung von weiteren Komponenten können aber auch in einer separaten Steuerung implementiert sein, die zumindest teilweise unabhängig von der Steuerung der Gelenkelemente ist.

Durch das oben beschriebene verbesserte Arbeitsplatzkonzept wird ein Übergang des Arbeitsplatzsystems von einer 2-dimensionalen Anpassung (reine vertikale Verstellung der Tischplatte und der Monitorhöhe) hin zu einer 3-dimensionalen Anpassung von Tischplatte und Monitorsupport in vertikaler Höhe und horizontalem Abstand erreicht. Dadurch können beispielsweise berührungssensitive Monitore in individuellen Arbeitsplätzen effizienter genutzt werden. Des Weiteren werden dadurch effektive Besprechungen in Kleingruppen durch die interaktive Nutzung von Monitoren ermöglicht und angeregt.

Ein optionales integriertes Regalsystem bietet dem Benutzer die Möglichkeit, persönliche Gegenstände wie ein Smartphone, eine Brieftasche oder andere abzulegen. Das Regalsystem kann in verschiedenen Ausprägungen ausgeführt sein und ist an der vertikalen Säule angebracht. Alternativ oder zusätzlich kann das Regalsystem auch an einer der anderen Komponenten, die an der Säule befestigt sind, wie etwa am Fußteil oder an einer Trägerstruktur und/oder an einer daran befestigten Arbeitseinheit angebracht sein.

Um dem Benutzer ein Gefühl von Privatsphäre durch einen blickdichten Sichtschutz und Dämmung von akustischen Störungen zu vermitteln ist auf der Säulenkonstruktion eine sich aufspannende Konstruktion, das Sichtschutzelement, angebracht. Dieses Sichtschutzelement kann aus verschiedenen Materialien gefertigt sein und in der Größe variieren. Er kann auch aus mehreren Teilen bestehen, die zueinander verschiebbar sind, beispielsweise fächerartig. Ebenso kann das Sichtschutzelement faltbare Abschnitte aufweisen. Zusätzlich kann es je nach Ausführung möglich sein, das Sichtschutzelement um den Drehpunkt der Säulenaufhängung zu drehen und/oder in seiner Rundung oder Länge zu verändern.

Zusammengefasst ermöglicht das verbesserte Arbeitsplatzkonzept durch die verschiedenen Ausgestaltungsformen die Bereitstellung eines Arbeitsplatzes, welcher dem Benutzer eine Arbeitsfläche, eine Darstellungskomponente, etwa einen Bildschirm, Aufbewahrungsmöglichkeiten und Privatsphäre zusammen in kompakter Bauweise und modular bietet.

Im Folgenden wird die Erfindung anhand beispielhafter Ausführungsformen unter Bezugnahme auf die Zeichnungen im Detail erläutert. Bauteile, die funktionell identisch sind oder einen identischen Effekt haben, können mit identischen Bezugszeichen versehen sein. Identische Bauteile oder Bauteile mit identischer Funktion sind unter Umständen nur bezüglich der Figur erklärt, in der sie zuerst erscheinen. Die Erklärung wird nicht notwendigerweise in den darauffolgenden Figuren wiederholt.

Es zeigen:
- Figur 1: eine schematische Darstellung eines Beispiels einer Arbeitszelle gemäß dem verbesserten Arbeitsplatzkonzept;
- Figur 2: ein nicht erfindungsgemäßes Beispiel eines Verrastungsmechanismus in einem Gelenkelement;
- Figur 3: ein erfindungsgemäßes Beispiel eines Verrastungsmechanismus in einem Gelenkelement;
- Figuren 4 und 5: verschiedene Beispiele von Gelenkelementen mit zusätzlichen Freiheitsgraden;
- Figur 6: ein Beispiel eines Gelenkelements mit elektromotorischem Antrieb;
- Figur 7: ein Detail des Beispiels einer Arbeitszelle mit Stabilisierungselement; und
- Figur 8, Figuren 9A und 9B und Figuren 10A und 10B: verschiedene Ansichten von Beispielen einer Arbeitszelle.

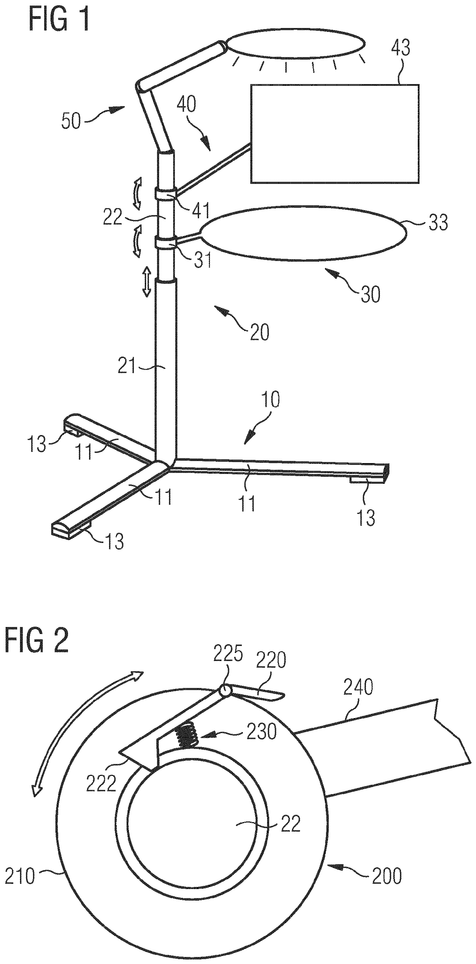

Figur 1 zeigt ein Ausführungsbeispiel einer Arbeitszelle gemäß dem verbesserten Arbeitsplatzkonzept. Die Arbeitszelle umfasst eine Fußkonstruktion 10, die vorliegend mit drei Streben oder Armen 11 sowie daran befestigten Auflageflächen 13 gebildet ist. Anstelle von drei Auflageflächen können jedoch auch mehr Auflageflächen oder aber auch mehr Streben mit Auflageflächen vorgesehen werden.

An der Fußkonstruktion 10 ist eine Säule 20 befestigt, wobei insbesondere ein unteres Teil 21 der Säule 20 mit der Fußkonstruktion 10 verbunden ist. Ein oberes Teil 22 der Säule 20 ist höhenverstellbar bezüglich des unteren Teils 21 ausgebildet, wobei die Höhenverstellung beispielsweise hydraulisch und/oder elektromechanisch erfolgt. Dazu können beispielsweise geregelte oder gesteuerte Elektromotoren, insbesondere Gleichstrommotoren oder bürstenlose Gleichstrommotoren eingesetzt werden. Die Säule 20 ist beispielsweise als teleskopische Säule ausgeführt.

An der Säule 20 sind eine erste Trägerstruktur 30 sowie eine zweite Trägerstruktur 40 befestigt, auf denen verschiedene Arbeitseinheiten montiert werden können. In dem dargestellten Beispiel ist an der ersten Trägerstruktur 30 eine Platte, insbesondere eine Tischplatte 33, befestigt, während an der zweiten Trägerstruktur 40 ein Bildschirm 43 montiert ist. Die beiden Trägerstrukturen 30, 40 sind über jeweilige Gelenkelemente 31, 41 mechanisch mit dem oberen Teil 22 der Säule 20 verbunden, wobei die Gelenkelemente 31, 41 jeweils eine axiale Drehung der Trägerstrukturen 30, 40 um die Säule 20 ermöglichen. Die Arbeitszelle umfasst ferner ein Lampenelement 50, das an dem oberen Teil 22 der Säule 20 befestigt ist. Das Lampenelement 50 ist in der dargestellten Ausführungsform mit mehreren Gelenken versehen, um eine variable Einstellung der Beleuchtung zu ermöglichen.

Zusätzlich zu den beiden Trägerstrukturen 30, 40 und den damit verbundenen Gelenkelementen 31, 41 können auch weitere Trägerstrukturen mit entsprechenden Gelenkelementen am oberen Teil 22 der Säule 20 befestigt werden.

Eines oder beide der beiden Gelenkelemente 31, 41 weist zusätzlich erfindungsgemäß einen elektromechanischen Verrastungsmechanismus auf, der eingerichtet ist, eine Bewegung des Gelenkelements 31, 41 bezüglich der Säule 20 in einem Normalzustand zu blockieren und bei einem von einem Benutzer der Arbeitszelle initiierten Verstellvorgang die Bewegung des Gelenkelements freizugeben. Dadurch können unbeabsichtigte Verstellungen der jeweiligen Trägerstruktur verhindert werden.

Eine solche Verrastung ist insbesondere bei dem Gelenkelement 41 sinnvoll, über das die zweite Trägerstruktur mit dem Bildschirm 43 befestigt ist, sodass eine Verstellung des Bildschirms ohne Zutun des Benutzers verhindert wird.

In einem nicht erfindungsgemäßen Beispiel weist keines der Gelenkelemente 31, 41 einen Verrastungsmechanismus auf, sodass die axiale Drehung der Trägerstrukturen 30, 40 grundsätzlich möglich ist. In einem solchen Fall kann aber in einem weiteren, hier nicht dargestellten Gelenkelement, das sich beabstandet zur Säule 20 in einer Trägerstruktur, beispielsweise in der Trägerstruktur 40 für einen Bildschirm, befindet, ein entsprechender Verrastungsmechanismus vorgesehen werden. Dadurch ist zwar eine Drehung des Bildschirms 43 um die Säule 20 möglich, ansonsten wird aber eine ungewollte Verstellung verhindert.

Der Verrastungsmechanismus kann eine Blockierung der Bewegung des Gelenkelements automatisch und/oder selbsthemmend durchführen. Somit kann beispielsweise eine Bewegung beziehungsweise Verstellung nur durch aktives Einwirken auf den Verrastungsmechanismus erfolgen.

Die Säule 20 ist in der Figur 1 als teleskopische Säule dargestellt, wobei das untere Teil 21 einen größeren Umfang als das obere Teil 22 aufweist und dieses umschließt.

Das obere Teil 22 kann in einer solchen Ausgestaltung im Wesentlichen einstückig ausgeführt sein. In einer eingefahrenen Position der Säule 20, also bei niedrigster Höhe, ragt ein Abschnitt des oberen Teils 22 aus dem unteren heraus, wobei an diesem Abschnitt die Gelenkelemente 31, 41 und das optionale Lampenelement 50 befestigt sind. Alternativ hierzu ist das obere Teil wenigstens mit zwei Stücken ausgebildet. Beispielsweise ist ein erstes Stück bzw. erster Abschnitt ein Bestandteil einer Anordnung zur Höhenverstellung, während ein zweites Stück bzw. ein zweiter Abschnitt an dem ersten Stück bzw. Abschnitt befestigt bzw. mechanisch gekoppelt ist. An diesem zweiten Abschnitt sind die Gelenkelemente 31, 41 und das optionale Lampenelement 50 befestigt. Der zweite Abschnitt wirkt beispielsweise als Verlängerung der vorzugsweise teleskopischen Anordnung zur Höhenverstellung, die durch das untere Teil 21 und das erste Stück bzw. den ersten Abschnitt gebildet sind.

Die genannte Alternative mit dem zusätzlichen Stück bzw. Abschnitt ermöglicht, dass das erste Stück und das untere Teil 21 als Komponenten der teleskopischen Anordnung zur Höhenverstellung bezüglich ihrer Größe direkt aufeinander abgestimmt sein können. Zusätzlich spielt es auch keine Rolle, ob die obere oder die untere Komponente der teleskopischen Anordnung zur Höhenverstellung einen größeren Umfang aufweist bzw. die andere Komponente umfasst. Somit sind beide Varianten, größerer Umfang unten oder größerer Umfang oben, möglich.

Figur 2 zeigt eine nicht erfindungsgemäße Ausführungsform eines Gelenkelements 200 mit einem solchen Verrastungsmechanismus, welches in der Arbeitszelle der Figur 1 eingesetzt werden kann. Das Gelenkelement weist einen äußeren Teil 210 auf, der sich über ein nicht näher dargestelltes Lager um das obere Teil 22 der Säule drehen kann. Für den Verrastungsmechanismus ist beispielsweise ein Hebel 220 vorgesehen, mit dem ein Stift oder Zapfen entriegelt und verriegelt werden kann, um eine Drehbewegung des Gelenkelements 200 zu verhindern. Beispielsweise ist der Hebel dazu im Punkt 225 drehbar gelagert und über ein Federelement 230 derart vorgespannt, dass nur durch den Druck auf den äußeren Teil des Hebels 220 die Verrastung gelöst wird und diese sich bei fehlendem Druck wieder automatisch einstellt. An dem Gelenkelement 200 ist ein Arm oder Träger 240 befestigt, der sich weiter in der hier nicht dargestellten Trägerstruktur erstreckt.

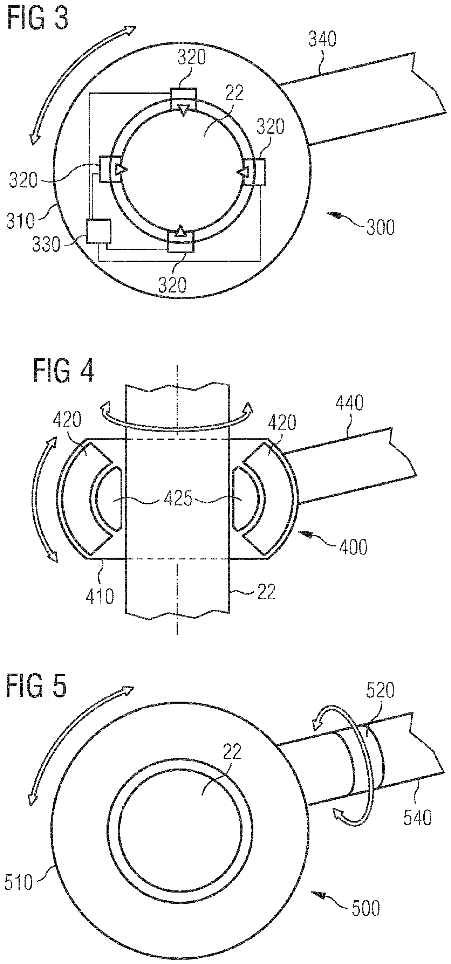

Figur 3 zeigt ein Ausführungsbeispiel eines Gelenkelements, welches in der Anordnung der Figur 1 verwendet werden kann. Das Gelenkelement 300 weist ähnlich wie das Gelenkelement 200 der Figur 2 einen rotierbaren äußeren Teil 310 auf, der über ein nicht dargestelltes Lager um das obere Teil 22 gedreht werden kann. Am Gelenkelement 300 ist ein Träger 340 montiert, welcher wie der Träger 240 sich in einer nicht dargestellten Trägerstruktur erstreckt. In dem Gelenkelement 300 sind erfindungsgemäß elektrische beziehungsweise elektromechanische Rastaktuatoren 320 vorgesehen, die von einem entsprechenden Steuerelement 330 angesteuert, um die Verrastung auszulösen beziehungsweise zu beenden. Somit kann über die Aktuatoren 320 eine Bewegung des Gelenkelements bezüglich der Säule sowohl blockiert als auch freigegeben werden.

Figur 4 zeigt eine Implementierung eines Gelenkelements 400, welches wiederum in der Ausführung der Figur 1 eingesetzt werden kann. Das Gelenkelement 400 umfasst wiederum einen äußeren Teil 410, der um das obere Teil 22 der Säule 20 drehbar ist. Zusätzlich sind Elemente 420 und 425 vorgesehen, über die eine Rotation des Gelenkelements 400 um eine Achse senkrecht zur Säule 20 möglich ist. Das Gelenkelement 400 weist somit wenigstens zwei Freiheitsgrade in der Bewegung auf, da neben der Säule selbst eine weitere Drehachse vorgesehen ist. Der Träger 440 entspricht in seiner Funktion den Trägern 240, 340 der vorhergehenden Figuren.

Ein Verrastungsmechanismus für die beiden Bewegungsrichtungen des Gelenkelements 400 ist aus Übersichtsgründen nicht dargestellt, kann aber vorgesehen werden.

Figur 5 zeigt eine weitere Ausgestaltung eines Gelenkelements 500, welches in der Arbeitszelle gemäß Figur 1 eingesetzt werden kann. Das Gelenkelement 500 weist zunächst ähnlich wie in den zuvor beschriebenen Ausführungen ein äußeres Teil 510 auf, welches sich um den oberen Teil 22 drehen kann. Zusätzlich ist im beziehungsweise an einem Träger 540, der sich weiter in eine Trägerstruktur erstreckt, ein weiteres Gelenk 520 vorgesehen, welches eine Rotation des Trägers ermöglicht. Somit weist das Gelenkelement 500 ähnlich wie das Gelenk 400 wenigstens zwei Freiheitsgrade in der Bewegung auf, da neben der Säule selbst eine weitere Drehachse vorgesehen ist. Auch hier können wiederum verschiedene Formen von Verrastungsmechanismen eingesetzt werden, die lediglich aus Übersichtsgründen nicht dargestellt sind.

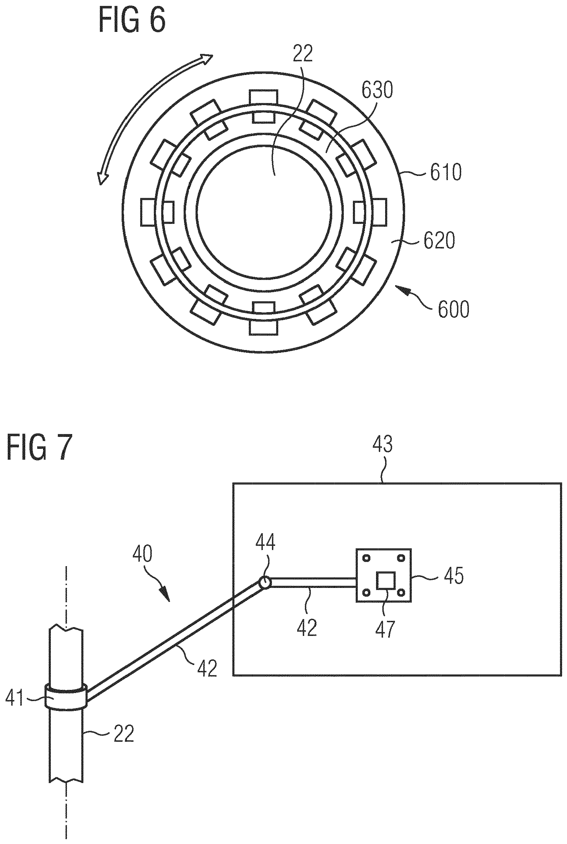

Figur 6 zeigt ein Gelenkelement 600 zum Einsatz in einer Arbeitszelle gemäß Figur 1, welches ein Teil 610 mit einem äußeren Teil 620 und einem inneren Teil 630 aufweist, wobei das äußere Teil 620 drehbar um das innere Teil 630 beziehungsweise das obere Teil 22 der Säule 20 gelagert ist.

Die Teile 620 und 630 bilden gemeinsam einen Elektromotor, der hier lediglich schematisch gestellt ist, wobei der Teil 630 als Stator und der Teil 620 als Rotor dient.

Durch die Ausbildung als Elektromotor ist eine automatische beziehungsweise durch den Benutzer gesteuerte Verstellung der jeweiligen Trägerstruktur möglich. Eine Steuerung des Motors und weitere dafür notwendige Komponenten sind aus Übersichtsgründen nicht dargestellt.

Abhängig von der Ausführung des Motors kann der Motor die rotatorische Verstellung des Gelenkelements 600 direkt, also insbesondere ohne Getriebe bewirken. Für eine hohe Genauigkeit bei der Einstellung des Drehwinkels ist hierbei eine präzise Ansteuerung des Motors vorteilhaft.

Alternativ kann ein Getriebe, insbesondere ein Planetengetriebe oder ein Schneckenradgetriebe vorgesehen werden, um eine Drehbewegung des Motors in eine vorzugsweise kleinere Drehbewegung des Gelenkelements 600 umzusetzen.

Figur 7 zeigt ein Detail eines Beispiels einer Arbeitszelle, insbesondere einen Ausschnitt des oberen Teils 22 der Säule 20 mit dem zweiten Gelenkelement 41, an dem die zweite Trägerstruktur 40 befestigt ist. Die zweite Trägerstruktur 40 ist dargestellt mit mehreren Trägern 42, die über eines oder mehrere (nicht dargestellt) weitere Gelenkelemente 44 miteinander verbunden sind. Die Trägerstruktur 40 endet in einer Halterung 45 für einen Bildschirm 43. Dabei ist die Halterung 45 beispielsweise ebenfalls gelenkig, insbesondere über ein Gelenkelement 44 (nicht dargestellt) mit einem oder mehreren Freiheitsgraden, an dem entsprechenden Träger 42 befestigt.

An der Halterung 45 ist wenigstens ein Bewegungssensor oder Lagesensor 47 vorgesehen, über den Bewegungen, Neigungen oder Schwingungen an der Trägerstruktur 40 und insbesondere an der Halterung 45 festgestellt werden können. Die Bewegungssensoren oder Lagesensoren sind beispielsweise als Neigungssensoren und/oder Beschleunigungssensoren bzw. Gyrosensoren ausgebildet.

Ferner ist in dem Gelenkelement 41 ein Stabilisierungselement vorgesehen, welches eingerichtet ist, Bewegungen, Neigungen oder Schwingungen der Säule und/oder der zugeordneten Trägerstruktur in Bezug auf eine räumliche Lage der Trägerstruktur 40 aktiv auszugleichen. Dazu wird das Stabilisierungselement beispielsweise auf Basis der vom Sensor 47 erfassten Bewegungsdaten angesteuert. Entsprechende Stabilisierungselemente können auch in den weiteren Gelenkelementen 44 vorgesehen werden, um ein ganzheitlich stabiles System zu erhalten. Das Trägerelement 40, insbesondere die Halterung 45, bleibt bei solchen Ausgestaltungen selbst bei Erschütterungen der Säule stabil, wodurch ein ungestörtes Arbeiten für den Benutzer ermöglicht wird.

Die Nutzung eines solchen Stabilisierungselements ist nur beispielhaft für einen Bildschirm beschrieben und lässt sich ebenso auf andere Arbeitseinheiten oder Trägerstrukturen übertragen. Die Bewegungen, Neigungen oder Schwingungen der Säule und/oder der zugeordneten Trägerstruktur können auch resultieren aus Bewegungen, Neigungen oder Schwingungen der anderen Komponenten, die an der Säule befestigt sind, etwa des Fußteils. Allgemein lassen sich somit jegliche Bewegungen, Neigungen oder Schwingungen im System der Arbeitszelle ausgleichen.

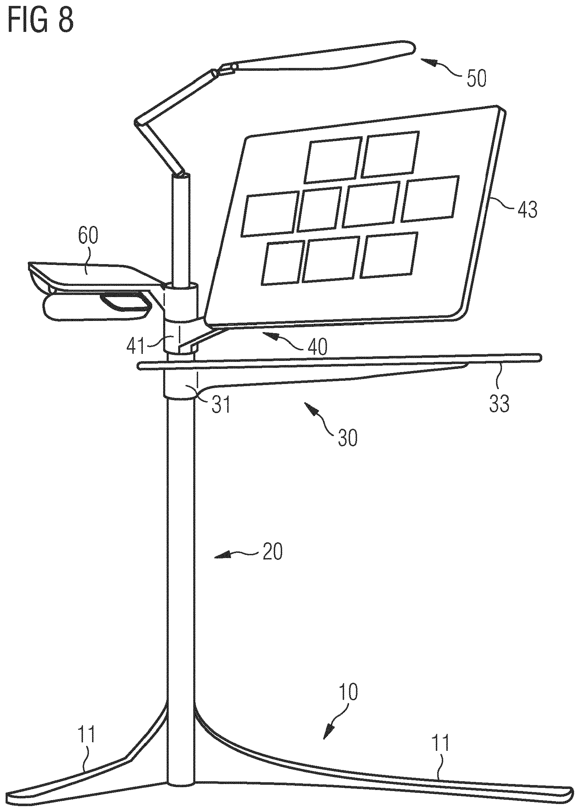

In den Figuren 8, 9A, 9B, 10A und 10B sind verschiedene Ansichten einer Arbeitszelle gemäß dem verbesserten Arbeitsplatzkonzept dargestellt. Auf eine Wiederholung der bereits beschriebenen Komponenten wird daher verzichtet.

Zusätzlich zu den zuvor beschriebenen Komponenten ist an der Säule 20 zusätzlich ein Regalelement 60 als weitere Trägerstruktur befestigt, welches einerseits das Verstauen von Büromaterial wie Stiften, Notizzettel oder dergleichen und andererseits auch die Ablage von persönlichen Gegenständen wie eines Mobiltelefons ermöglicht.

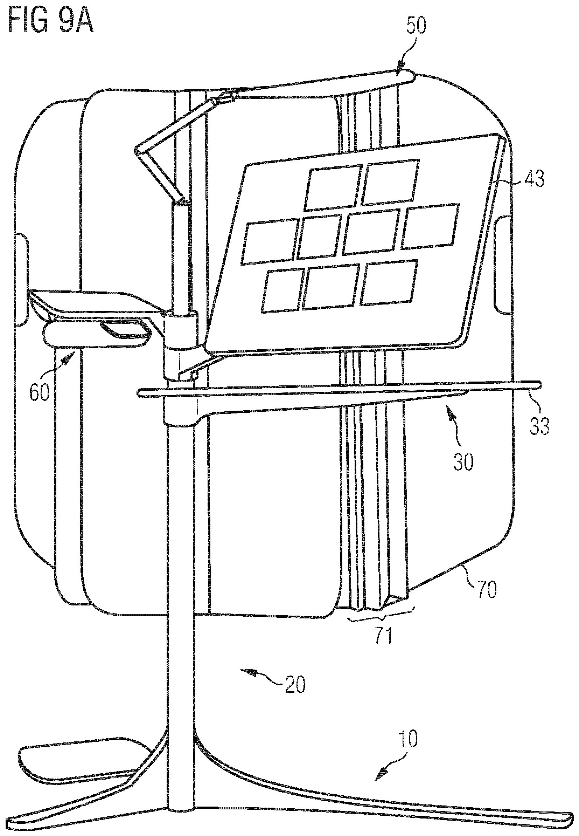

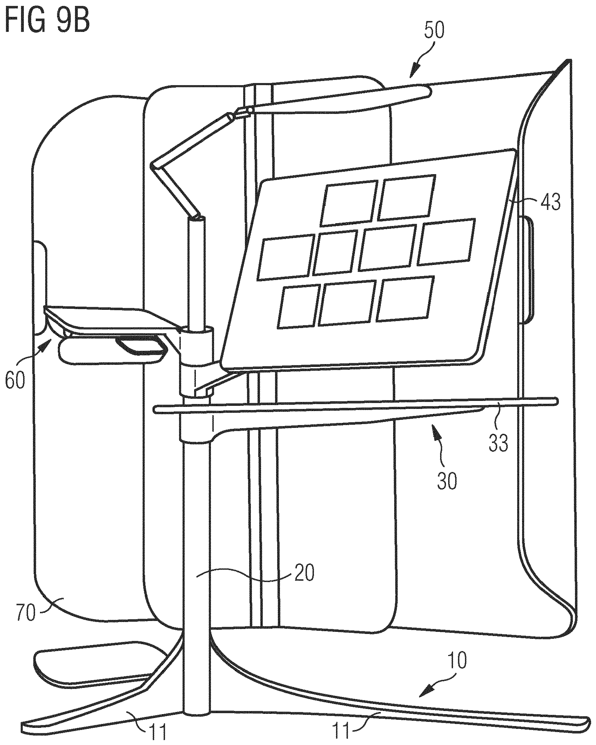

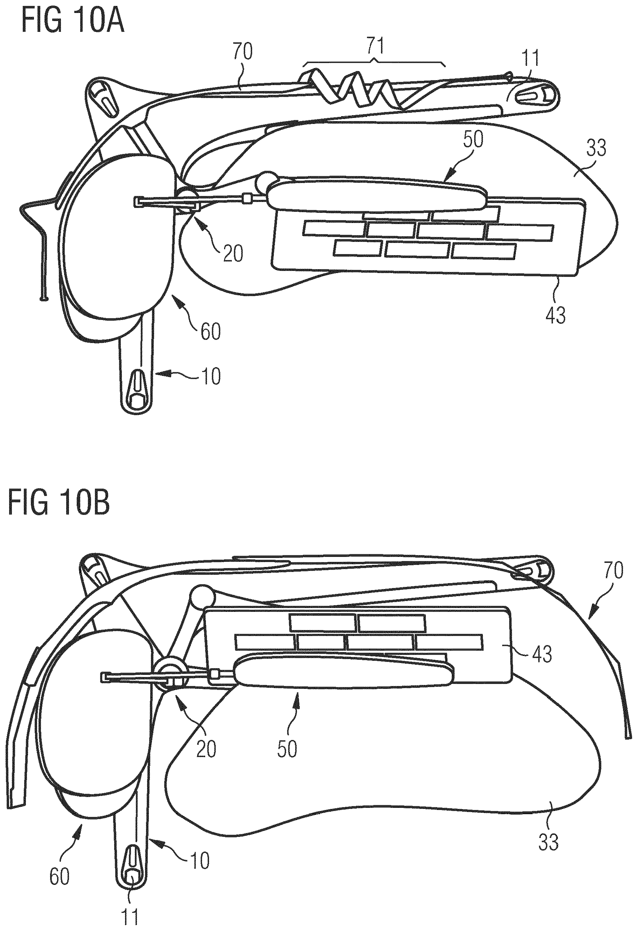

In den Figuren 9A, 9B, 10A und 10B ist zusätzlich ein Sichtschutzelement 70 dargestellt, welches dem Nutzer ein Gefühl von Privatsphäre vermitteln kann. Das Sichtschutzelement 70 ist beispielsweise über ein weiteres Gelenkelement an der Säule 20 befestigt. Das Sichtschutzelement kann aus verschiedenen Materialien gefertigt sein und in der Größe variieren. Es kann auch aus mehreren Teilen bestehen, die zueinander verschiebbar sind, um das Maß der Abdeckung an die jeweilige Arbeitssituation anpassen zu können. Beispielsweise ist ein faltbarer Bereich 71 des Sichtschutzelements 70 dargestellt, über den ebenfalls das Maß der Abdeckung an die jeweilige Arbeitssituation angepasst werden kann. Wie aus den verschiedenen Ansichten ersichtlich, kann das Sichtschutzelement somit beispielsweise in seiner Rundung und/oder Länge verändert werden.

In verschiedenen Ausgestaltungen kann die Arbeitszelle ferner eine Steuerung umfassen. Die Steuerung ist beispielsweise eingerichtet, eine Bewegung wenigstens eines der Gelenkelemente 31, 41 in Antwort auf die Betätigung von Sensoren durch den Benutzer anzusteuern. Alternativ oder zusätzlich ist die Steuerung eingerichtet, einer vom Benutzer initiierten Bewegung eines der Gelenkelemente und/oder einer der Trägerstrukturen auf Basis von wenigstens einem Signal eines Bewegungssensors der Arbeitszelle zu folgen. Ein solcher Bewegungssensor ist beispielsweise als Neigungssensor und/oder Beschleunigungssensor bzw. Gyrosensor ausgebildet. Ferner alternativ oder zusätzlich kann die Steuerung eingerichtet sein, gespeicherte Konfigurationen wenigstens eines der Gelenkelemente und/oder wenigstens eines der Trägerstrukturen in Antwort auf eine Auswahl durch den Benutzer einzustellen.

Weitere Möglichkeiten für den Einsatz der Steuerung sind damit nicht ausgeschlossen. Insbesondere können über die Steuerung auch die Höhenverstellung der Säule, wenn ein elektromechanischer Antrieb vorgesehen ist, und/oder die Ansteuerung von weiteren an die Arbeitszelle angeschlossenen Komponenten, wie zum Beispiel das Lampenelement, erfolgen. Zu diesem Zweck können auch einfache Tastsensoren vorgesehen werden, die von der Steuerung ausgewertet werden. Höhenverstellung und/oder die Ansteuerung von weiteren Komponenten können aber auch in einer separaten Steuerung implementiert sein, die zumindest teilweise unabhängig von der Steuerung der Gelenkelemente ist. Die Steuerung ist beispielsweise an einer der Trägerstrukturen befestigt oder in der Fußkonstruktion untergebracht.

Die verwendeten Sensoren können auch optische Sensoren umfassen, etwa bildgebende Sensoren wie 2D- oder 3D-Kamerasensoren. Durch solche Sensoren können beispielsweise Bewegungen eines Benutzers detektiert und ausgewertet werden, um Verstellvorgänge zu initiieren oder zu unterstützen.

### Bezugszeichenliste

- 10: Fußkonstruktion
- 11: Streben
- 13: Auflageflächen
- 20: Säule
- 21: unteres Teil
- 22: oberes Teil
- 30, 40: Trägerstruktur
- 31, 41: Gelenkelement
- 33: Platte
- 42: Strebe
- 43: Bildschirm
- 44: Gelenkelement
- 45: Halterung
- 47: Sensor
- 50: Lampenelement
- 60: Regalelement
- 70: Sichtschutzelement
- 200, 300, 400, 500, 600: Gelenkelement
- 210, 310, 410, 510, 610: äußeres Teil Gelenkelement
- 240, 340, 440, 540: Strebe
- 220: Hebel
- 222: Zapfen
- 225: Drehpunkt
- 230: Federelement
- 320: Verrastungsaktuator
- 330: Steuerelement
- 420, 425: Drehelemente
- 520: Gelenk
- 620: Rotor
- 630: Stator

## Patentansprüche

1. Arbeitszelle, aufweisend
- eine Fußkonstruktion (10) mit mindestens drei Auflageflächen (13), insbesondere für einen Bodenkontakt;
- eine Säule (20) mit einem unteren Teil (21), das mit der Fußkonstruktion (10) verbunden ist, und mit einem oberen Teil (22), das bezüglich dem unteren Teil (21) höhenverstellbar, insbesondere elektromechanisch höhenverstellbar ist;
- eine erste Trägerstruktur (30), die über ein erstes Gelenkelement (31) mechanisch mit dem oberen Teil (22) der Säule (20) verbunden ist, wobei das erste Gelenkelement (31) eine axiale Drehung der ersten Trägerstruktur um die Säule (20) ermöglicht; und
- eine wenigstens zweite Trägerstruktur (40), die über ein zweites Gelenkelement (41) mechanisch mit dem oberen Teil (22) der Säule (20) verbunden ist, wobei das zweite Gelenkelement (41) eine axiale Drehung der zweiten Trägerstruktur um die Säule (20) ermöglicht;
- wobei wenigstens ein Gelenkelement aus dem ersten und zweiten Gelenkelement (31, 41) einen Verrastungsmechanismus aufweist, der eingerichtet ist, eine Bewegung des Gelenkelements bezüglich der Säule (20) in einem Normalzustand zu blockieren und bei einem von einem Benutzer der Arbeitszelle initiierten Verstellvorgang die Bewegung des Gelenkelements freizugeben; und
- **dadurch gekennzeichnet, dass** der Verrastungsmechanismus wenigstens ein elektromechanisches Element (320) aufweist, welches die Blockierung und die Freigabe der Bewegung des Gelenkelements bewirkt.

2. Arbeitszelle nach Anspruch 1,
bei der die Blockierung der Bewegung des Gelenkelements im Verrastungsmechanismus automatisch und/oder selbsthemmend erfolgt.

3. Arbeitszelle nach Anspruch 1 oder 2,
bei der der Verrastungsmechanismus wenigstens ein Federelement (230) aufweist, welches die Blockierung der Bewegung des Gelenkelements bewirkt.

4. Arbeitszelle nach einem der Ansprüche 1 bis 3,
bei der das erste und/oder das zweite Gelenkelement (31, 41) eine axiale Drehung der ersten und zweiten Trägerstruktur um wenigstens eine weitere Achse ermöglichen, die in einem Winkel, insbesondere rechten Winkel, zur Säule (20) verläuft.

5. Arbeitszelle nach Anspruch 4,
bei der der jeweilige Verrastungsmechanismus eingerichtet ist, eine Bewegung des Gelenkelements bezüglich der weiteren Achse in einem Normalzustand zu blockieren und bei einem von einem Benutzer der Arbeitszelle initiierten Verstellvorgang die Bewegung des Gelenkelements bezüglich der weiteren Achse freizugeben.

6. Arbeitszelle nach einem der Ansprüche 1 bis 5,
bei der das erste und/oder das zweite Gelenkelement für eine elektromechanische Drehung eingerichtet sind.

7. Arbeitszelle nach einem der Ansprüche 1 bis 6,
bei der an der ersten Trägerstruktur (30) eine Platte, insbesondere eine Tischplatte (33) befestigt ist.

8. Arbeitszelle nach einem der Ansprüche 1 bis7,
bei der an der zweiten Trägerstruktur (40) eine Halterung (45) für einen Bildschirm (43) befestigt ist.

9. Arbeitszelle nach einem der Ansprüche 1 bis 8,
bei der das erste und/oder das zweite Gelenkelement (31, 41) ein Stabilisierungselement aufweisen, welches eingerichtet ist, eine räumliche Lage der zugeordneten Trägerstruktur bezüglich Bewegungen, Neigungen oder Schwingungen der Säule (20) und/oder der zugeordneten Trägerstruktur auszugleichen.

10. Arbeitszelle nach einem der Ansprüche 1 bis 9,
bei der wenigstens eine der Trägerstrukturen ein jeweiliges weiteres Gelenkelement aufweist, welches beabstandet zur Säule (20) angeordnet ist.

11. Arbeitszelle nach Anspruch 10,
wobei das weitere Gelenkelement einen weiteren Verrastungsmechanismus aufweist, der eingerichtet ist, eine Bewegung des weiteren Gelenkelements in dem Normalzustand zu blockieren und bei einem von dem Benutzer initiierten Verstellvorgang die Bewegung des weiteren Gelenkelements freizugeben.

12. Arbeitszelle nach einem der Ansprüche 1 bis 11, wobei
- das obere Teil (22) ein erstes Stück und wenigstens ein zweites Stück aufweist, das mit dem ersten Stück mechanisch gekoppelt ist;
- das erste Stück mit dem unteren Teil (21) eine Anordnung zur Höhenverstellung bildet; und
- an dem zweiten Stück das erste und zweite Gelenkelement (31, 41) befestigt sind.

13. Arbeitszelle nach einem der Ansprüche 1 bis 12,
ferner umfassend ein Lampenelement (50), das an dem oberen Teil (22) der Säule (20) befestigt ist, insbesondere beweglich befestigt ist.

14. Arbeitszelle nach einem der Ansprüche 1 bis 13,
ferner umfassend ein Sichtschutzelement (70), welches an der Säule (20) befestigt ist.

15. Arbeitszelle nach einem der Ansprüche 1 bis 14,
ferner umfassend ein Steuerung, die für wenigstens eines der folgenden eingerichtet ist:
- Ansteuern einer Bewegung wenigstens eines der Gelenkelemente in Antwort auf die Betätigung von Sensoren durch den Benutzer;
- Folgen einer vom Benutzer initiierten Bewegung eines der Gelenkelemente und/oder einer der Trägerstrukturen auf Basis von wenigstens einem Signal eines Bewegungssensors der Arbeitszelle;
- Einstellen von gespeicherten Konfigurationen wenigstens eines der Gelenkelemente und/oder wenigstens einer der Trägerstrukturen in Antwort auf eine Auswahl durch den Benutzer.

## Claims

1. A workcell, comprising
- a base structure (10) with at least three support surfaces (13), in particular for ground contact;
- a column (20) with a lower part (21) which is connected to the base structure (10) and with an upper part (22) which is height-adjustable, in particular electromechanically height-adjustable, relative to the lower part (21);
- a first support structure (30) which is mechanically connected to the upper part (22) of the column (20) via a first joint element (31), the first joint element (31) allowing axial rotation of the first support structure about the column (20); and
- an at least second support structure (40) mechanically connected to the upper part (22) of the column (20) via a second joint element (41), the second joint element (41) allowing axial rotation of the second support structure about the column (20);
- wherein at least one of said first and second joint elements (31, 41) comprises a latching mechanism configured to block movement of said joint element with respect to said column (20) in a normal state and to release movement of said joint element during an adjustment operation initiated by a user of said workcell; and
**characterized in that**
the latching mechanism comprises at least one electromechanical element (320) which causes the blocking and the release of the movement of the joint element.

2. The workcell according to claim 1,
wherein the blocking of the movement of the joint element in the latching mechanism is automatic and/or self-locking.

3. The workcell according to claim 1 or 2,
wherein the latching mechanism comprises at least one spring element (230) which causes the movement of the joint element to be blocked.

4. The workcell according to any one of claims 1 to 3, wherein the first and/or the second joint element (31, 41) allow axial rotation of the first and second support structure about at least one further axis, which extends at an angle, in particular at right angles, to the column (20).

5. The workcell according to claim 4,
wherein the respective latching mechanism is configured to block movement of the joint element with respect to the further axis in a normal state and to release the movement of the joint element with respect to the further axis during an adjustment process initiated by a user of the workcell.

6. The workcell according to any one of claims 1 to 5,
wherein the first and/or the second joint element are configured for electromechanical rotation.

7. The workcell according to any of claims 1 to 6,
wherein a panel, in particular a table top (33), is attached to the first support structure (30).

8. The workcell according to any one of claims 1 to 7,
wherein a mounting (45) for a screen (43) is attached to the second support structure (40).

9. The workcell according to one of the claims 1 to 8, wherein the first and/or the second joint element (31, 41) comprise a stabilizing element which is configured to compensate for a spatial position of the associated support structure with respect to movements, inclinations or vibrations of the column (20) and/or the associated support structure.

10. The workcell according to one of claims 1 to 9,
wherein at least one of the support structures comprises a respective further joint element which is arranged at a distance from the column (20).

11. The workcell according to claim 10,
wherein said further joint element comprises a further latching mechanism configured to block movement of said further joint element in said normal state and to release movement of said further joint element upon a user initiated adjustment operation.

12. The workcell according to any one of claims 1 to 11, wherein
- the upper part (22) comprises a first piece and at least one second piece which is mechanically coupled to the first piece;
- the first piece forms with the lower part (21) a height adjustment arrangement; and
- the first and second joint elements (31, 41) are attached to the second piece.

13. The workcell according to one of claims 1 to 12,
further comprising a lamp element (50) which is fixed, in particular movably fixed, to the upper part (22) of the column (20).

14. The workcell according to one of claims 1 to 13, further comprising a privacy screen element (70) attached to the column (20).

15. The workcell according to one of the claims 1 to 14, further comprising a controller configured for at least one of the following:
- controlling movement of at least one of the joint elements in response to actuation of sensors by the user;
- following a user-initiated movement of one of the joint elements and/or one of the support structures based on at least one signal from a movement sensor of the workcell;
- setting stored configurations of at least one of the joint elements and/or at least one of the support structures in response to a selection by the user.

## Revendications

1. Cellule de travail, comprenant
- une structure de pied (10) avec au moins trois surfaces d'appui (13), en particulier pour un contact avec le sol ;
- une colonne (20) avec une partie inférieure (21), qui est reliée à la structure de pied (10), et avec une partie supérieure (22), qui est réglable en hauteur par rapport à la partie inférieure (21), en particulier réglable en hauteur de manière électromécanique ;
- une première structure de support (30) qui est reliée mécaniquement à la partie supérieure (22) de la colonne (20) par un premier élément d'articulation (31), le premier élément d'articulation (31) permettant une rotation axiale de la première structure de support autour de la colonne (20) ; et
- une au moins deuxième structure de support (40) qui est reliée mécaniquement à la partie supérieure (22) de la colonne (20) par un deuxième élément d'articulation (41), le deuxième élément d'articulation (41) permettant une rotation axiale de la deuxième structure de support autour de la colonne (20) ;
- dans lequel au moins un élément d'articulation parmi le premier et le deuxième élément d'articulation (31, 41) comprend un mécanisme d'encliquetage agencé pour bloquer un mouvement de l'élément d'articulation par rapport à la colonne (20) dans un état normal et pour libérer le mouvement de l'élément d'articulation lors d'une opération de réglage initiée par un utilisateur de la cellule de travail ; et
**caractérisé en ce que**
le mécanisme d'encliquetage comprend au moins un élément électromécanique (320) qui provoque le blocage et la libération du mouvement de l'élément d'articulation.

2. Cellule de travail selon la revendication 1,
dans laquelle le blocage du mouvement de l'élément d'articulation dans le mécanisme d'encliquetage est automatique et/ou autobloquant.

3. Cellule de travail selon la revendication 1 ou 2,
dans laquelle le mécanisme d'encliquetage comporte au moins un élément élastique (230) qui assure le blocage du mouvement de l'élément d'articulation.

4. Cellule de travail selon l'une des revendications 1 à 3, dans laquelle le premier et/ou le deuxième élément d'articulation (31, 41) permettent une rotation axiale de la première et de la deuxième structure de support autour d'au moins un autre axe qui forme un angle, notamment un angle droit, avec la colonne (20).

5. Cellule de travail selon la revendication 4,
dans laquelle le mécanisme d'encliquetage respectif est agencé pour bloquer un mouvement de l'élément d'articulation par rapport à l'autre axe dans un état normal et pour libérer le mouvement de l'élément d'articulation par rapport à l'autre axe lors d'une opération de réglage initiée par un utilisateur de la cellule de travail.

6. Cellule de travail selon l'une des revendications 1 à 5, dans laquelle le premier et/ou le deuxième élément d'articulation sont agencés pour une rotation électromécanique.

7. Cellule de travail selon l'une des revendications 1 à 6, dans laquelle un plateau, notamment un plateau de table (33), est fixé à la première structure de support (30).

8. Cellule de travail selon l'une des revendications 1 à 7, dans laquelle un support (45) pour un écran (43) est fixé à la deuxième structure de support (40).

9. Cellule de travail selon l'une des revendications 1 à 8, dans laquelle le premier et/ou le deuxième élément d'articulation (31, 41) comportent un élément de stabilisation agencé pour compenser une position spatiale de la structure de support associée par rapport à des mouvements, des inclinaisons ou des oscillations de la colonne (20) et/ou de la structure de support associée.

10. Cellule de travail selon l'une des revendications 1 à 9, dans laquelle au moins l'une des structures de support présente un autre élément d'articulation respectif, qui est disposé à distance de la colonne (20).

11. Cellule de travail selon la revendication 10,
dans laquelle l'élément d'articulation supplémentaire comprend un mécanisme d'encliquetage supplémentaire qui est agencé pour bloquer un mouvement de l'élément d'articulation supplémentaire dans l'état normal et pour libérer le mouvement de l'élément d'articulation supplémentaire lors d'une opération de réglage initiée par l'utilisateur.

12. Cellule de travail selon l'une des revendications 1 à 11, dans laquelle
- la partie supérieure (22) comprend une première pièce et au moins une deuxième pièce couplée mécaniquement à la première pièce ;
- la première pièce forme avec la pièce inférieure (21) un ensemble de réglage en hauteur ; et
- les premier et deuxième éléments d'articulation (31, 41) sont fixés à la deuxième pièce.

13. Cellule de travail selon l'une des revendications 1 à 12, comprenant en outre un élément de lampe (50) fixé, notamment de manière mobile, à la partie supérieure (22) du montant (20) .

14. Cellule de travail selon l'une des revendications 1 à 13, comprenant en outre un élément de protection visuelle (70) fixé à la colonne (20).

15. Cellule de travail selon l'une des revendications 1 à 14, comprenant en outre une commande agencée pour au moins l'un des éléments suivants :
- Initiation d'un mouvement d'au moins un des éléments d'articulation en réponse à l'actionnement de capteurs par l'utilisateur ;
- Suivre un mouvement initié par l'utilisateur de l'un des éléments d'articulation et/ou de l'une des structures de support sur la base d'au moins un signal d'un capteur de mouvement de la cellule de travail ;
- le réglage de configurations mémorisées d'au moins un des éléments d'articulation et/ou d'au moins une des structures de support en réponse à une sélection effectuée par l'utilisateur.
